# EUROPÄISCHE PATENTANMELDUNG

(11) **EP 1 326 169 A2**
(43) Veröffentlichungstag der Anmeldung: **09.07.2003**
(21) Anmeldenummer: 02028514.4
(22) Anmeldetag: 19.12.2002
(51) Int. Cl.: G06F 12/02

(54) **PreFetch-Schaltungsanordnung für ein CPU-Speicher-System mit Ready-Signal-Steuerung**

(30) Priorität: 08.01.2002 DE 10200390
(71) Anmelder: SIEMENS AKTIENGESELLSCHAFT, 80333 München (DE)
(72) Erfinder: Reif, Stefan, 80636 München (DE); Wahr, Alfons, 82256 Fürstenfeldbruck (DE)

(57) **Zusammenfassung**

Die Erfindung betrifft eine Schaltungsanordnung für CPU-Speicher-Systeme mit Ready-Signal-Steuerung zur Verbesserung der Leistungsfähigkeit der CPU (1) beim Auslesen und Schreiben von Daten. Eine besonders einfache und effektive Möglichkeit zur Verbesserung der Leistungsfähigkeit besteht darin, einen steuerbaren Inkrementer (2), der entweder die von der CPU (1) ausgegebene Adresse (a) oder eine inkrementierte Adresse (a+1) ausgibt, ein Adressregister (4,10) zum Speichern der vom steuerbaren Inkrementer (2) ausgegebenen Adresse, sowie einen Komparator (5,K0-Kn) zum Vergleich der im Adressregister (4,10) gespeicherten Adresse mit einer von der CPU (1) in einem nachfolgenden Taktzyklus (T) ausgegebenen Adresse vorzusehen, wobei der Komparator (5,K0-Kn) den steuerbaren Inkrementer (2) derart steuert, dass dieser bei Übereinstimmung der verglichenen Adressen (HIT) eine inkrementierte Adresse (a+1), und bei Nichtübereinstimmung der verglichenen Adressen die von der CPU (1) gelieferte Adresse (a) ausgibt.

## Beschreibung

Die Erfindung betrifft eine Schaltungsanordnung für ein CPU-Speicher-System mit Ready-Signal-Steuerung zur Verbesserung der Leistungsfähigkeit der CPU beim Datenaustausch mit dem Speicher, gemäß dem Oberbegriff des Patentanspruchs 1.

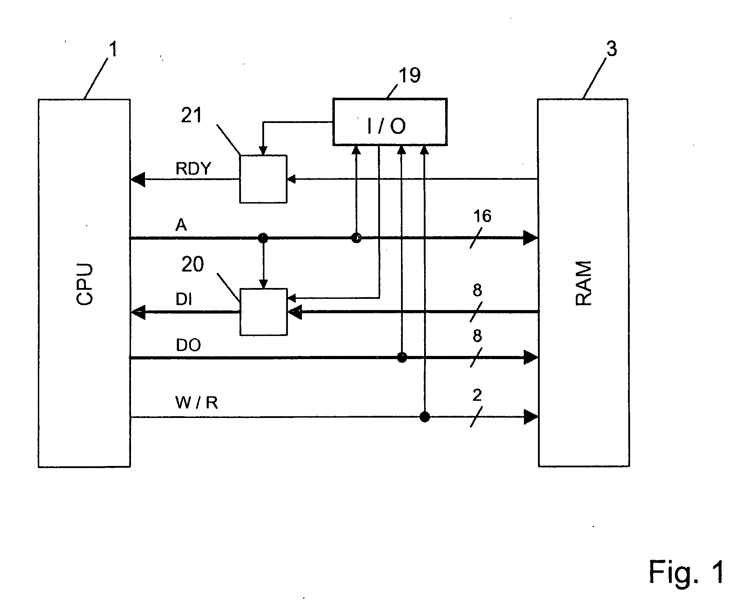

Figur 1 zeigt eine einfache CPU-Speicher-Anordnung mit zugehörigem Bus-System und Schnittstellen. Die CPU 1 hat einen Adreßbus A und Datenbus-Schnittstellen, die durch das W/R-Signal (W: Write, R: Read) gesteuert werden, für einzulesende und auszugebende Daten DI, DO mit einer vorgegebenen Bitbreite von zum Beispiel 8 Bit. Über diese Datenbus-Schnittstellen DI/DO greift die CPU 1 auf einen Daten- und Programm-Speicher 3 zu. Letzterer kann physikalisch und logisch getrennt aus mehreren Speicher-Modulen, aber auch, wie gezeigt, als einheitlicher größerer Speicher 3 gebildet sein.

Die CPU-Speicher-Anordnung umfasst ferner eine I/O-Steuerung 19 (I/O: Eingabe-/Ausgabe), die, wie auch der Speicher 3, die CPU 1 über ein sog. Ready-Signal RDY aktivieren bzw. in einen Wartezustand versetzen kann. Üblicherweise sind der Adressbus A, die Datenleitungen DI, DO und die Steuerleitungen W/R und RDY auch an diese I/O-Steuerung angeschlossen. In diesem Fall ist im Datenpfad DI vor der CPU 1 ein Multiplexer 20 eingefügt, der zum Beispiel direkt von der CPU oder, wie in Figur 1 gezeigt, vom Adreßbus A gesteuert wird. Das gleiche gilt entsprechend auch für das RDY-Signal, das aber auch durch ein einfaches UND-Gatter 21 oder invers durch ein wired-OR realisiert werden kann.

Bei den Speicher-Zugriffsoperationen wird im wesentlichen zwischen Read-, Write- und Fetch-Operationen unterschieden, wobei Read das Lesen von Daten, Write, das Schreiben von Daten und Fetch das Holen von Befehls-Code bezeichnet. Zwischen Read- und Fetch-Zugriffen besteht einzeln betrachtet kein ursächlicher Unterschied, so dass im folgenden aus Gründen der Einfachheit nur auf Read-Zugriffe Bezug genommen wird (Fetch-Befehle können auch als Befehls-Read-Operationen aufgefasst werden). Neben den genannten Zugriffs-Operationen kennt die CPU ferner einen aktionslosen Zustand NOOP (No Operation), bei dem nur CPU-interne Operationen durchgeführt werden.

Neben den CPU-internen Eigenschaften bestimmen vor allem die Zugriffshäufigkeit und die Speicher-Zugriffszeit der Speicher (für Read- und Write-Zugriffe) die Leistungsfähigkeit der CPU 1. Bei einfachen CPU-Systemen, wie dem in Figur 1 dargestellten, wird die Taktrate t_{Cycle}, mit der Befehle von der CPU im günstigsten Fall ausgeführt werden können, im wesentlichen durch das Maximum der CPU-internen Zeiten T_{CPU} (Adresse und gegebenenfalls Schreibdaten an der Schnittstelle zum Speicher 3 anlegen sowie Eingangsdaten bis zum Ziel-Register durchschalten) und der Speicher-Zugriffszeiten t_{Mem} für das Ausführen der Read-, Write- oder Fetch-Befehle bestimmt.

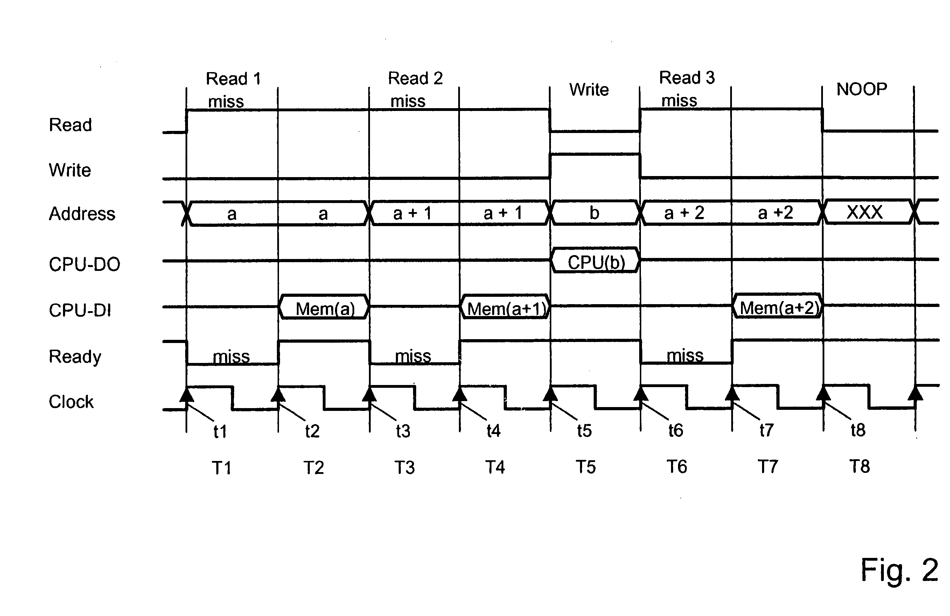

Ein Impulsdiagramm für die in der Schaltung von Figur 1 geführten Signale ist in Figur 2 dargestellt.

Die Art des Speicherzugriffs wird durch die Signale Read und Write bestimmt. Wie zu erkennen ist, soll zunächst ein Read-Befehl (Read 1) für eine Adresse a im Takt T1 ausgeführt werden. Hierzu gibt die CPU an den Speicher die Adresse a aus. Da erst am Ende des nachfolgenden zweiten Taktzyklus T2 im besten Fall das mit der Adresse a gespeicherte Datum vom Speicher erhalten wird, wird die CPU nach dem Zeitpunkt t1 mittels des Ready-Signals für eine Taktperiode T2 lang deaktiviert (Status = MISS). Zum Zeitpunkt t2 ist die CPU 1 somit inaktiv und gibt keinen neuen Zugriffs-Befehl und keine neue Adresse an den Speicher 3 aus. Am Ende des zweiten Taktzyklus T2 erhält die CPU 1 das unter der Adresse a gespeicherte Datum über den Dateneingang DI und schaltet es zum CPU-internen Ziel-Register durch.

Zum Zeitpunkt t3 ist die CPU wieder aktiv (das Ready-Signal wurde zuvor gesetzt), übernimmt das zuvor angeforderte Datum in das Ziel-Register und gibt eine zweite Leseanforderung (Read2) für die Adresse a+1 an den Speicher 3 aus. Das mit der Adresse a+1 gespeicherte Datum wird wiederum am Ende des nachfolgenden Taktzyklus T4 über den Dateneingang DI von der CPU erhalten. Wenn der Speicher oder die I/O-Steuerung bei einem Read-/Fetch-Befehl dazu nicht in der Lage wäre, das angeforderte Datum innerhalb von zwei Taktzyklen zu holen, müsste das Ready-Signal dementsprechend länger auf MISS gesetzt werden, um die CPU-Aktivitäten für weitere Takte zu unterbinden.

Der nächste, von der CPU 1 durchgeführte Befehl im Takt T5 ist ein Write-Befehl (Write, der im nächsten Taktzyklus T6 im Speicher 3 ausgeführt wird). Wie zu erkennen ist, gibt die CPU 1 zu diesem Zweck eine Adresse b über den Adressbus und ein zugehöriges Datum über den Datenausgang CPU-DO an den Speicher 3 aus (t5). Danach wird die CPU nicht deaktiviert (das Ready-Signal bleibt gesetzt), da sie während des nächsten Zyklus T6 bereits einen anderen Befehl ausführen kann.

In den Taktzyklen T6,T7 wird ein weiterer Read-Befehl ausgeführt. Im Taktzyklus T8 wird dagegen kein Befehl ausgeführt (NOOP). Wie zu erkennen ist, befinden sich die Signale Read und Write beide im low-Zustand.

Diese Art der Steuerung des CPU-Speicher-Systems mit Ready-Signal läßt sich im wesentlichen wie folgt zusammenfassen: bei einem Write- und bei einem NOOP-Befehl wird das Ready-Signal nicht auf Low gesetzt und die CPU kann sofort, also ohne Halt weiterarbeiten. Bei jedem Read/Fetch-Befehl und jedem I/O-Befehl wird dagegen das Ready-Signal für einen Takt lang weggenommen, wodurch ein sogenannter Wait-Zustand der CPU generiert wird. Das Ready-Signal wird also immer erst im zweiten Takt nach einer Leseanforderung wieder gesetzt (vergleiche Figur2).

Der Arbeitsablauf von CPU und Speicher für ein CPU-Speicher-System mit Ready-Signal-Steuerung (ohne PreFetch-Mechanismus) ist in der nachfolgenden Tabelle 1 dargestellt. Gibt die CPU einen Read(Fetch)-Befehl aus, so ist der Speicher in diesem Taktzyklus arbeitslos, d.h. er befindet sich in einem Wait-Zustand. Im nachfolgenden Taktzyklus arbeitet der Speicher und holt das in der adressierten Zelle gespeicherte Datum, während die CPU steht. Diese befindet sich im Wait-Zustand und übernimmt erst am Ende des zweiten Taktzyklus das Datum. Dies geschieht fast ständig alternierend bei jedem Read(Fetch)-Befehl.

**Tabelle 1:**

| CPU-Speicher-Anordnung ohne PreFetch-Mechanismus | |
|---|---|
| CPU: | Memory: |
| Read a | wait |
| wait and fetch a | Read a |
| Read a+1 | wait |
| wait and fetch a+1 | Read a+1 |
| Read a+2 | wait |
| wait and fetch a+2 | Read a+2 |
| . . . | |

Ein Last-repräsentativer Befehlsablauf eines Programms hat beispielsweise folgende Zusammensetzung:

**Tabelle 2:**

| Verteilung der Befehlshäufigkeit | | |
|---|---|---|
| Anzahl Fetch (F) = | 24268 = | 74,1% |
| Anzahl Read (R) = | 2301 = | 7,0% |
| Anzahl Access (x=F+R) = | 26569 = | 81,1% |
| Anzahl Write (W) = | 2969 = | 9,1% |
| Anzahl I/O (I) = | 594 = | 1,8% |
| Anzahl Noop (N) = | 2635 = | 8,0% |
| Anzahl Befehle (b=all) = | 32767 = | 100,0% |

Für die Durchführung dieser Operationen benötigt das CPU-System mit Ready-Signal-Steuerung von Figur 1 jeweils zwei Taktzyklen bei Fetch-, Read- und I/O-Befehlen und jeweils einen Taktzyklus bei Write- und NOOP-Befehlen. Insgesamt sind somit 59.930 Taktzyklen zur Durchführung des Programms erforderlich. Wären dagegen jeweils zwei Taktzyklen pro Befehl notwendig, so hätte die Durchführung des Programms 65.534 Taktzyklen erfordert. Der Gewinn beruht auf der Ready-Signal-Steuerung.

Die Ready-Signal-Steuerung reduziert also die Anzahl der Taktzyklen durchschnittlich von 200 Zyklen auf 182,9 Zyklen, steigert also die effektive CPU-Leistungsfähigkeit um 9,35%. Für viele Anwendungen ist eine solche Steigerung der Leistungsfähigkeit jedoch nicht ausreichend. Es werden daher im wesentlichen zwei Verfahren angewandt, um die Leistungsfähigkeit weiter zu steigern.

Beim sogenannten Interleaving ist der Speicher nicht 1-Byte, sondern 2-,4-,8-,16- oder 32-Byte breit, allgemein m-Byte breit strukturiert. Aus schaltungstechnischen Gründen wird für m üblicherweise eine Zweierpotenz gewählt.

Wird nun so ein m-Byte breiter "Adress-Block" zum ersten Mal angesprochen, so muß ein Wait-Zustand eingeschoben werden, um das erste Byte zu lesen. Alle nachfolgenden Zugriffe auf diesen Adress-Block können dagegen unmittelbar, also ohne Wait-Zustand erfolgen.

Mit diesem Verfahren läßt sich die Leistungsfähigkeit eines CPU-Speicher-Systems bei Read/Fetch-Befehlen um mehr als 50% steigern. Dieses Verfahren hat jedoch auch Nachteile, so sind z.B. relativ breite Multiplexer und viele über den IC führende Verbindungsleitungen erforderlich. Darüber hinaus ist der Schreibvorgang in einem solchen m-Byte breiten Speicher, insbesondere bei fehlender Byte-Strukturierung des Speichers relativ kompliziert und zeitaufwendig. Gerade bei fehlender Byte-Strukturierung sind mehrere Taktzyklen erforderlich, um die Schreibdaten in den entsprechenden Adressblock zu schreiben. Dadurch reduziert sich die im Hinblick auf Read-Befehle erlangte Steigerung der Leistungsfähigkeit um nahezu die Hälfte. Bei einem 4-Byte Interleaving mit einer 50%-igen Steigerung der Leistungsfähigkeit bezüglich der Read-Befehle hätte dies insgesamt nur eine Verbesserung der Leistungsfähigkeit um 28,9% zur Folge. Auch dieser Wert ist für viele Anwendungen zu wenig.

Eine andere Möglichkeit zur Verbesserung der Leistungsfähigkeit besteht darin, sogenannte Cache-Speicher einzusetzen. Die leistungsverbessernde Wirkung solcher Cache-Speicher setzt aber erst ab einer gewissen Cache-Größe, beispielsweise ab etwa 128 Byte Cache-Kapazität ein. Ein geeigneter Cache-Speicher hat daher einen Umfang von mindestens 256 oder 512 Bytes. Eine Verbindung von Cache-Speichern mit m-fach Interleaving kann die CPU-Leistungsfähigkeit zwar weiter verbessern, dabei ist jedoch der Aufwand zur Realisierung dieser Cache-Speicher relativ hoch.

Es ist daher die Aufgabe der vorliegenden Erfindung, eine Schaltungsanordnung für ein CPU-Speicher-System mit Ready-Signal-Steuerung zu schaffen, mit dem die Leistungsfähigkeit der CPU beim Auslesen und Schreiben von Daten in einfacher Weise gesteigert werden kann.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Der wesentliche Gedanke der Erfindung besteht darin, eine Art PreFetch-Mechanismus mittels einer Schaltungsanordnung zu realisieren, die einen steuerbaren Inkrementer, der entweder die von der CPU ausgegebene Adresse oder eine hierzu inkrementierte Adresse ausgibt, einen Adressspeicher zum Speichern der vom steuerbaren Inkrementer ausgegebenen Adresse, sowie einen Komparator zum Vergleich der im Adressspeicher gespeicherten Adresse mit einer von der CPU in einem nachfolgenden Taktzyklus ausgegebenen Adresse aufweist, wobei der Komparator den steuerbaren Inkrementer derart steuert, dass dieser bei Übereinstimmung der verglichenen Adressen (HIT) eine inkrementierte Adresse, und bei nicht-Übereinstimmung der verglichenen Adressen (MISS) die von der CPU gelieferte Adresse ausgibt.

Der Adressspeicher kann entweder eine oder mehrere Speicherzellen umfassen. Vorzugsweise ist der Adressspeicher ein Adress-Schieberegister mit mehreren Adress-Speicherzellen, in das die vom steuerbaren Inkrementer ausgegebenen Adressen hinein geschoben werden. Das Adress-Schieberegister umfasst vorzugsweise mindestens zwei oder drei, kann aber auch mehrere, insbesondere fünfzehn bis zwanzig Adress-Speicherzellen aufweisen.

Gemäß einer bevorzugten Ausgestaltung der Erfindung ist jede der Adress-Speicherzellen mit einem Komparator verknüpft.

Gemäß einer bevorzugten Ausgestaltung der Erfindung ist jede der Adress-Speicherzellen mit einem Gültigkeitsbit valid verknüpft.

Enthält der Adressspeicher mehr als eine Speicherzelle, dann umfaßt die erfindungsgemäße Schaltungsanordnung neben dem Adress-Schieberegister vorzugsweise auch ein Daten-Schieberegister mit n-1 (bei einem RAM-Speichertyp auch n) Daten-Speicherzellen, in denen jeweils das zu den im Adress-Schieberegister gespeicherten Adressen gehörige, aus dem Speicher (SRAM/RAM) ausgelesene Datum gespeichert ist.

Zur Steuerung des Adress- bzw. Daten-Schieberegisters ist vorzugsweise eine Schieberegister-Steuereinheit vorgesehen, mit der insbesondere das Hindurchschieben der in den Adressund Daten-Speicherzellen gespeicherten Adressen und Daten gesteuert werden kann.

Das Adress- und Daten-Schieberegister wird vorzugsweise derart gesteuert, dass nur bei Read-Zugriffen neue Adresswerte mit ihren zugehörigen Daten in das Adress- und Daten-Schieberegister eingeschrieben werden.

Um zu verhindern, dass bereits gespeicherte Werte mehrfach in die Schieberegister gültig eingespeichert werden (bei einem Read-HIT), werden in einer ersten Ausführungsform neue Werte vorzugsweise nur bei einer Nicht-Übereinstimmung der von den Komparatoren verglichenen Adressen, also bei einem Read-MISS, in die Schieberegister eingetragen. Dadurch wird erreicht, dass immer alle gültigen Einträge voneinander verschiedene Adressen besitzen, es können mit diesem Mechanismus mehr verschiedene Adressen in den n Schieberegisterzellen enthalten sein, da Mehrfacheinträge damit verhindert werden. Dies hat eine weitere Leistungssteigerung der CPU zur Folge.

Von Nachteil ist bei dieser ersten Ausführungsform, dass einen Hit verursachende Einträge schon gegen das Ende der Schieberegister vorgerückt sein können, so dass sie bei kurz nachfolgenden CPU-Zugriffen in den Schieberegistern eventuell nicht mehr enthalten sind. In einer zweiten Ausführungsform werden deshalb die neuen Werte vorzugsweise immer in die Schieberegister neu eingetragen, zugleich werden aber bereits enthaltene Einträge bei dieser Adresse ungültig gesetzt. Dadurch wird erreicht, dass immer alle gültigen Einträge voneinander verschiedene Adressen besitzen und dass die Einträge mit der höchsten Trefferwahrscheinlichkeit am Anfang der Schieberegister stehen und damit zugleich eine große Verweildauer im Schieberegister aufweisen. Auch dies hat eine Leistungssteigerung der CPU zur Folge.

Nachteil dieser zweiten Ausführungsformen ist, dass in den Schieberegistern ungültige Einträge enthalten sein können, verursacht durch Schreiboperationen der CPU auf einer Adresse, die in einer der Schieberegisterzellen enthalten ist (Write-Hit), oder durch das Löschen eines Schieberegister-Eintrags durch die Ausführung in der vorangegangenen zweiten Ausführungsform.

Aufbauend auf der zweiten Ausführungsform sollen nun in einer dritten Ausführungsform die Schieberegisterzellen nicht bei jedem neuen Eintrag immer alle geschoben werden, sonder ungültig gewordene Einträge in den Schieberegistern sollen zunächst gelöscht und die entstandenen Lücken vom Anfang her aufgefüllt werden. Zu den Vorteilen der zweiten Ausführung kommt nun hinzu, dass die Schieberegister jetzt immer maximal gut gefüllt sind, da entstehende Belegungslücken nun schnellstmöglichst wieder gefüllt werden. Auch dies steigert die Leistung der CPU relevant.

Durch diese Maßnahmen läßt sich die CPU-Leistung nochmals deutlich steigern, da die Schieberegister nicht durch unnötige und ungültige Einträge belastet sind und die gültig enthaltenen Einträge zudem eine optimale Reihenfolge einnehmen.

Gemäß einer Ausführungsform der Erfindung umfasst der steuerbare Inkrementer einen Inkrementer sowie einen Multiplexer, an dessen Eingang die von der CPU zugeführte Adresse und die vom Inkrementer zugeführte Adresse anliegen und der in Abhängigkeit von einem Steuersignal entweder die erstere oder letztere Adresse ausgibt.

Der im steuerbaren Inkrementer enthaltene Inkrementer kann entweder unmittelbar die von der CPU angelegte oder die in einer Adress-Registerzelle enthaltene Adresse erhalten.

Gemäß einer anderen Ausführungsform der Erfindung ist der steuerbare Inkrementer als sogenannter Carry-Inkrementer ausgeführt, der in der Lage ist, die von der CPU zugeführte Adresse A um 1 zu inkrementieren oder nicht. Dies muß sehr schnell erfolgen, was beispielsweise durch eine sogenannte interne Carry-Look-Ahead-Funktion, die durch breite Gatter einfach zu realisieren ist, möglich ist.

Das Steuer- bzw. Carry-Signal für den steuerbaren Inkrementer wird vorzugsweise von einem der Komparatoren erzeugt, wobei das Carry-Signal im Falle eines HITs aktiv ist.

Die Daten-Speicherzellen des Daten-Schieberegisters können zur Anwendung des Interleaving-Verfahrens auch mehrere Byte breit realisiert sein.

Die erfindungsgemäße Schaltungsanordnung ist vorzugsweise als externe, separate Baueinheit zwischen CPU und Speicher angeordnet, kann aber z.B. auch in den IC, in dem die CPU enthalten ist, integriert sein.

Der Speicher ist vorzugsweise ein Speicher mit wahlfreiem Zugriff (RAM), und insbesondere ein statischer RAM-Speicher (Statischer Schreib-Lese-Speicher).

Der Speicher kann zudem ein synchroner Speicher (SRAM) mit wahlfreiem Zugriff sein, ein synchroner statischer Schreib-Lese-Speicher. Dieser hat dem eigentlichen RAM ein Register im Adreß-, im Schreibdaten- und im Steuersignalpfad vorgeschaltet.

Die Erfindung wird nachfolgend anhand der beigefügten Zeichnungen beispielhaft näher erläutert. Es zeigen:
Figur 1 eine schematische Darstellung eines CPU-Speicher-Systems mit Ready-Signal-Steuerung;
Figur 2 ein Impulsdiagramm einer CPU mit SRAM-Speicher ohne PreFetch-Mechanismus;
Figur 3 ein Impulsdiagramm einer CPU mit SRAM-Speicher und PreFetch-Mechanismus;
Figur 4 eine erste Ausführungsform einer Schaltungsanordnung mit einer einzigen Adress-Registerzelle;
Fig. 5 Eine Abwandlung der Schaltungsanordnung von Figur 4;
Figur 6 eine Ausführungsform der Schaltungsanordnung von Figur 4 mit einem Carry-Inkrementer;
Figur 7 eine zweite Ausführungsform einer Schaltungsanordnung mit einem Adress-Schieberegister sowie einem Daten-Schieberegister;
Figur 8 eine Abwandlung der Schaltungsanordnung von Figur 7;
Figur 9 eine Ausführungsform der Schaltungsanordnung von Figur 7 mit einem Carry-Inkrementer;
Figur 10 eine dritte Ausführungsform der Erfindung mit einer Schieberegister-Steuereinheit;
Figur 11 eine dritte Ausführungsform der Erfindung mit einem zweiten Satz von Komparatoren; und
Figur 12 eine andere Ausführungsform der Schaltungsanordnung von Figur 11.

Figur 1 zeigt eine schematische Darstellung eines CPU-Speicher-Systems mit Ready-Signal-Steuerung. Ein solches CPU-Speicher-System dient im wesentlichen zum Schreiben und Auslesen von Daten in bzw. aus einem Schreib-Lese-Speicher 3, wie z.B. einem SRAM-Speicher (einem synchronen statischen Schreib- und Lesespeicher). Das Lesen/Schreiben von Daten erfolgt über Datenbusse DI,DO (DI : Dateneingang an der CPU; DO: Datenausgang an der CPU). Die Art des Speicherzugriffs (Read, Fetch, Write, NOOP) wird durch Statussignale am Befehlsbus W/R angezeigt. Die Adresse der Speicherzelle, auf die ein Zugriff erfolgen soll, wird von der CPU 1 über einen Adressbus A ausgegeben. Die CPU 1 kann mittels eines sogenannten Ready-Signals RDY von einer Eingabe/Ausgabe-Steuerung I/O 19, wie auch vom Speicher 3 her, aktiviert bzw. deaktiviert werden. Üblicherweise sind der Adressbus A, die Datenleitungen DI, DO und die Steuerleitungen W/R und RDY auch an diese I/O-Steuerung angeschlossen. In diesem Fall ist im Datenpfad DI vor der CPU 1 ein Multiplexer 20 eingefügt, der zum Beispiel direkt von der CPU oder, wie in Figur 1 gezeigt, vom Adreßbus gesteuert wird. Das gleiche gilt entsprechend auch für das RDY-Signal, das aber auch durch ein einfaches UND-Gatter 21 oder invers durch ein wired-OR oder ein einfaches OR-Gatter realisiert werden kann.

Zur weiteren Erläuterung von Fig. 1 sowie zur Erläuterung von Figur 2 wird auf die Beschreibungseinleitung verwiesen.

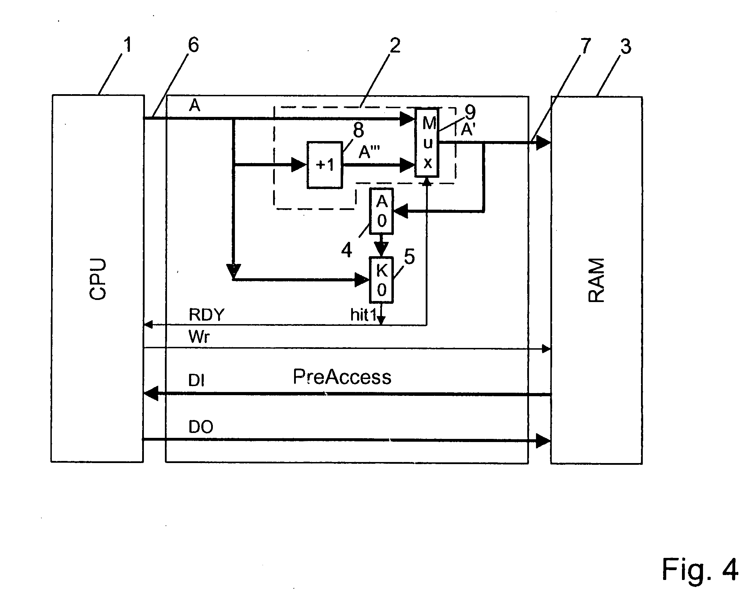

Figur 4 zeigt eine erste Ausführungsform einer Schaltungsanordnung zur Verbesserung der Leistungsfähigkeit eines CPU-Speicher-Systems. Die Schaltungsanordnung umfaßt im wesentlichen einen steuerbaren Inkrementer 2, der entweder die von der CPU 1 ausgegebene Adresse A oder eine inkrementierte Adresse A+1 an den RAM-Speicher 3 ausgibt, sowie einen am Ausgang des steuerbaren Inkrementers 2 angeschlossenen Adressspeicher 4 zum Speichern der vom steuerbaren Inkrementer 2 ausgegebenen Adresse A bzw. A+1.

Die Schaltungsanordnung umfaßt ferner einen Komparator 5 zum Vergleich der im Adressregister 4 gespeicherten Adresse mit einer von der CPU 1 im nächsten Taktzyklus ausgegebenen Adresse A. Bei Übereinstimmung der verglichenen Adressen erzeugt der Komparator 5 ein Signal "HIT" (high) und bei Nichtübereinstimmung ein Signal "MISS" (low).

Das Ausgangssignal des Komparators 5 wird der CPU 1 als Ready-Signal RDY zugeführt und dient gleichzeitig als Steuersignal für den Multiplexer 9 des steuerbaren Inkrementers 2.

Bei Anliegen eines HIT-Signals am Multiplexer 9 selektiert dieser den A'''-Adressbus und gibt somit die inkrementierte Adresse A+1 am Ausgang aus, bei Anliegen eines MISS-Signals selektiert dieser den Adressbus A und gibt entsprechend die Adresse A auf den A'-Bus aus.

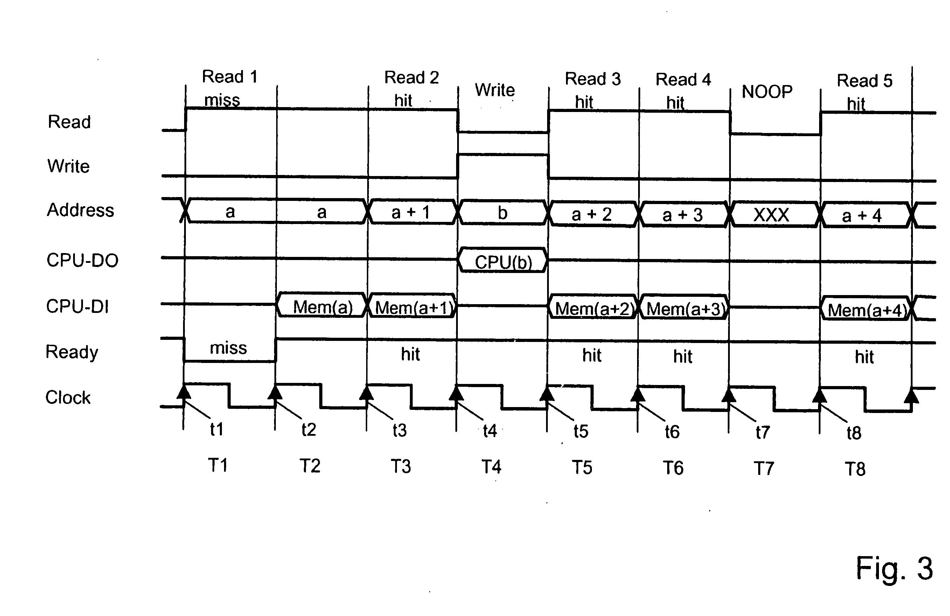

Die Funktionsweise der Schaltungsanordnung wird nachfolgend anhand von Read/Fetch-, Write- und NOOP-Befehlen bezgl. Figur 3 erläutert. In einem ersten Taktzyklus T1 wird von der CPU 1 ein Read-Befehl (Read 1) auf eine neue (das heißt auf eine im Adressspeicher nicht enthaltene) Adresse a ausgeführt. Wie zu erkennen ist, ist der Befehlsstatus "Read" (das Read-Signal ist high, das Write-Signal low). Die CPU 1 gibt zum Zeitpunkt t1 eine Adresse a auf den Adressbus A aus. Der Zustand der CPU 1 ist aktiv, da das Ready-Signal zum Zeitpunkt t1 noch gesetzt ist.

Im ersten Taktzyklus T1 wird die Adresse a dem Multiplexer 9 an einem ersten Multiplexer-Eingang zugeführt. Da der vom Komparator 5 durchgeführte Adressvergleich im ersten Taktzyklus T1 zum Ergebnis "MISS" führt (der Adressspeicher 4 ist noch leer oder enthält eine andere Adresse), wird die CPU 1 für den zweiten Taktzyklus T2 in einen Wait-Zustand gesetzt (das Ready-Signal ist zum Zeitpunkt t2 noch low!). Der Multiplexer 9 wählt den Adress-Bus A, und die Adresse a wird an den Speicher 3 über den A'-Bus weitergeleitet und mit der nächsten Taktflanke t2 im Register 4 gespeichert.

Bei der folgenden Taktflanke t2 taktet der Speicher 3 die Zugriffs-Adresse a sowie den Befehlsstatus (Read) in interne Register ein.

Im nachfolgenden Taktzyklus T2 holt der Speicher 3 das adressierte Datum und stellt es an seinem Ausgang bereit. Das ausgelesene Datum wird schließlich über den DI-Bus an die CPU 1 weiter geleitet, die das Datum am Ende des Taktzyklus T2 mit der Taktflanke t3 übernimmt.

Wie erwähnt, taktet das Adressregister 4 immer die gleiche Information ein wie der Speicher 3. Ab Beginn des zweiten Taktzyklus T2 (Zeitpunkt t2, die CPU 1 gibt immer noch die Adresse a aus) stimmen somit die von der CPU gelieferte Adresse a und die im Adressregister 4 gespeicherte Adresse a überein, so dass das Ready-Signal wieder in den High-Zustand übergeht.

Das vom Komparator 5 ausgegebene HIT-Signal RDY, das gleichzeitig zur Steuerung des Multiplexers 9 dient, bewirkt, dass der Multiplexer 9 im zweiten Taktzyklus T2 den Adressbus A''' selektiert und die vom Inkrementer 8 inkrementierte Adresse a+1 über den A'-Bus an den Speicher 3 anlegt. Zusätzlich wird die inkrementierte Adresse a+1 mit der Taktflanke t3 in das Adressregister 4 übernommen.

Am Ende des zweiten Taktzyklus T2 liegt somit am Speicher 3 bereits die Adresse a+1 zur Übernahme mit der Taktflanke t3 an, die von der CPU 1 erst im nächsten Taktzyklus T3, also nach der Taktflanke t3, ausgegeben wird. Die erfindungsgemäße Schaltungsanordnung nach Figur 4 ermöglicht dem Speicher 3 sozusagen einen Blick für einen Schritt in die Zukunft. Der Speicher 3 kann daher bei einer Folge von Read-Befehlen, deren Adresse jeweils um 1 höher ist als beim vorangehenden Read-Befehl (wie dies bei linearen Programm-Befehlsfolgen der Fall ist), in jedem Taktzyklus ein Speicherwort auslesen und muss nicht, wie in Fig. 2, jeden zweiten Taktzyklus untätig warten. Das zeitliche Vorziehen der von der CPU 1 ausgegebenen Adressen um einen Taktzyklus wird auch als PreFetch-Mechanismus bezeichnet.

Im nachfolgenden dritten Taktzyklus T3, in dem die CPU 1 die Adresse a+1 ausgibt, ergibt der vom Komparator 5 durchgeführte Adressvergleich als Ergebnis ein "HIT" und hat nicht wie bisher einen Wait-Zustand zur Folge. Da die Adresse a+1 bereits im zweiten Taktzyklus T2 am Speicher 3 angelegen hatte, kann bereits im dritten Taktzyklus T3 das zugehörige Datum (MEM(a+1)) ausgelesen werden. Gleichzeitig erzeugt der steuerbare Inkrementer 2 bereits im dritten Taktzyklus T3 die inkrementierte Adresse a+2, die wiederum an den Speicher 3 und das Adressregister 4 weitergegeben wird, während der Speicher 3 noch den Read-Befehl für die Adresse a+1 abarbeitet.

Im vierten Taktzyklus T4 wird ein Write-Zugriff auf eine Adresse b ausgeführt. Das zugehörige Datum wird von der CPU 1 über den Datenausgang DO an den Speicher 3 angelegt. Das Schreiben von Daten erfolgt seitens der CPU 1 innerhalb eines Taktzyklus. Die Aktualisierung der adressierten Speicherzelle im Speicher 3 erfolgt im nachfolgenden Taktzyklus T5.

Im nachfolgenden Taktzyklus T5 ergibt der vom Komparator 5 durchgeführte Adressvergleich als Ergebnis ein "MISS" (anders als in Figur 3 dargestellt), da im Adressregister 4 die Adresse b gespeichert ist und die CPU 1 die Adresse a+2 ausgibt. Die CPU 1 fällt daher, in gleicher Weise wie vorstehend bezüglich der Adresse a beschrieben, in einen Wait-Zustand, der erst am Ende des nachfolgenden Taktes T6 aufgehoben wird.

Die in den Figuren 4-6 dargestellte Schaltungsanordnung ist daher insbesondere für sogenannte RISC-CPUs (reduced instruction set Computer) geeignet, bei denen das Programm sehr oft längere, linear angeordnete Befehlssequenzen aufweist, also Programmstücke, bei denen die CPU jeweils eine größere Anzahl von Fetch-Operationen (Read a, Read a+1, Read a+2 ...) unmittelbar aufeinander durchzuführen hat, bevor ein (bedingter) Sprung, ein Write-Befehl oder ein Daten-Read-Befehl mit eingeschobener anderer Adressoperation erfolgt.

Wie beschrieben, stören die im Programmablauf enthaltenen Nicht-Fetch-Befehle, die z.B. mit einer Häufigkeit von 25% auftreten, den kontinuierlichen Fetch-Ablauf beträchtlich. Dabei spielen die mit weniger als 10% Häufigkeit vorkommenden I/O- und NOOP-Befehle keine große Rolle, da die Schaltungsanordnung während dieser Modul-Externen-Ausfallzyklen "angehalten" werden könnte. Zu diesem Zweck könnte beispielsweise ein Multiplexer 9 mit einem weiteren Multiplexer-Eingang vorgesehen sein, dem der Inhalt des Adressregisters während der I/Ound NOOP-Befehle zugeführt wird zum Durchschalten an den Ausgang des steuerbaren Inkrementers oder es könnte in Figur 4-5 ein abschaltbarer Inkrementer vorgesehen sein. Eine andere Problemlösung für die Figur 4-6 ist die einfache Nicht-Übernnahme der störenden aktuellen Adresse in den Adressspeicher 4.

Wirklich störend sind die Daten-Write-Befehle und Daten-Read-Befehle. Diese stören den kontinuierlichen Befehlsfluß, wie vorstehend beschrieben, wesentlich.

Zwei verschiedene Programmabläufe mit einer Reihe kontinuierlicher Fetch-Befehle (Read a+1, Read a+2, etc.) und verschiedenen Nicht-Fetch-Befehlen in diesem Fetch-Befehlsfluss sind in den nachfolgenden beiden Tabellen dargestellt.

**Tabelle 3:**

| Write (oder NOOP)-Befehl mitten im PreFetch-Fluß (bei Adressregister-Tiefe=1) | |
|---|---|
| CPU: | Memory: |
| Read a | wait |
| wait and fetch a | Read a |
| Read a+1 | Read a+1 |
| Read a+2 | Read a+2 |
| Read a+3 Write b | Read a+3 Read a+4 (verworfener PreFetch- Access!) |
| Read a+4 | Write b |
| wait and fetch a+4 | Read a+4 (wiederholter Access auf a+4!) |
| Read a+5 | Read a+5 |
| Read a+6 | Read a+6 |
| ... | |

**Tabelle 4:**

| Daten-Read- (oder I/O)Befehl mitten im PreFetch-Fluß (bei Adressregister-Tiefe=1) | |
|---|---|
| CPU: | Memory: |
| Read a | wait |
| wait and fetch a | Read a |
| Read a+1 | Read a+1 |
| Read a+2 | Read a+2 |
| Read a+3 | Read a+3 |
| Read b | Read a+4 (verworfener PreFetch- |
| | Access!) |
| wait and fetch b | Read b |
| Read a+4 | wait (= Read b+1) |
| wait and fetch a+4 | Read a+4 (wiederholter Access auf a+4!) |
| Read a+5 | Read a+5 |
| Read a+6 | Read a+6 |
| . . . | |

Wie zu erkennen, ist aufgrund der Register-Tiefe des Adressregisters 4 von nur einer Registerzelle bei einem auf einen Nicht-Fetch-Befehl (Write b, Read b) folgenden Fetch-Befehl (Read a+4) jeweils ein Wait-Zustand der CPU erforderlich.

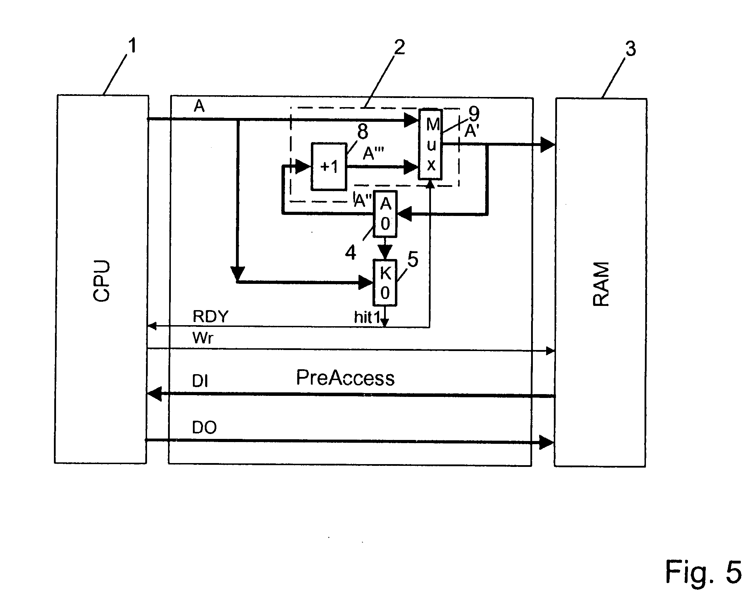

Eine andere Ausführungsform der Schaltungsanordnung von Figur 4 ist in Figur 5 dargestellt. Diese unterscheidet sich von der in Figur 4 dadurch, dass die zu inkrementierende Adresse dem Inkrementer 8 nicht direkt von der CPU 1, sondern vom Adressregister 4 über einen A''-Bus zugeführt wird.

Die Schaltungsanordnung nach Figur 5 hat den Vorteil, dass die Adresse für die Adressinkrementierung fast eine ganze Taktperiode lang anliegt, während in Figur 4 die Inkrementierung parallel zu dem vom Komparator 5 durchgeführten Adressvergleich konkurrierend abläuft. Im ungünstigen Fall müßte die Taktperiode T für die CPU verlängert werden und würde dadurch die Leistung des Systems negativ beeinflussen.

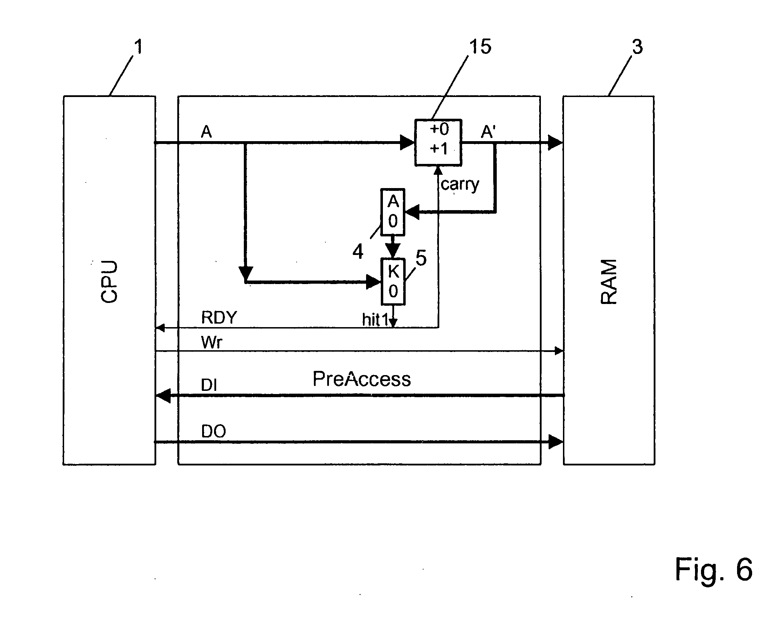

In Figur 6 ist eine alternative Ausgestaltung dargestellt, bei der der Multiplexer 9 eingespart werden kann. Der steuerbare Inkrementer 2 ist in diesem Fall als sogenannter Carry-Inkrementer 15 ausgeführt. Mit Hilfe einer sogenannten Carry-Look-Ahead-Logik kann der Carry-Inkrementer 15 mit minimaler Durchlaufzeit realisiert werden und kann damit unter Umständen genauso schnell schalten wie der steuerbare Multiplexer 9 der Figuren 4 und 5. Dabei kommt der Carry-Inkrementer 15 mit weniger Gattern aus.

Mit der in den Figuren 4-6 dargestellten Ein-Register-Lösung kann eine HIT-Rate von mehr als 60% erzielt werden. Wie erwähnt, ist aber aufgrund der Register-Tiefe des Adressregisters 4 von nur einer Registerzelle bei einem auf einen Nicht-Fetch-Befehl (Write b, Read b) folgenden Fetch-Befehl (Read a+4) jeweils ein Wait-Zustand der CPU erforderlich. Dies kann durch eine größere Registertiefe des Adressregisters 4 behoben werden.

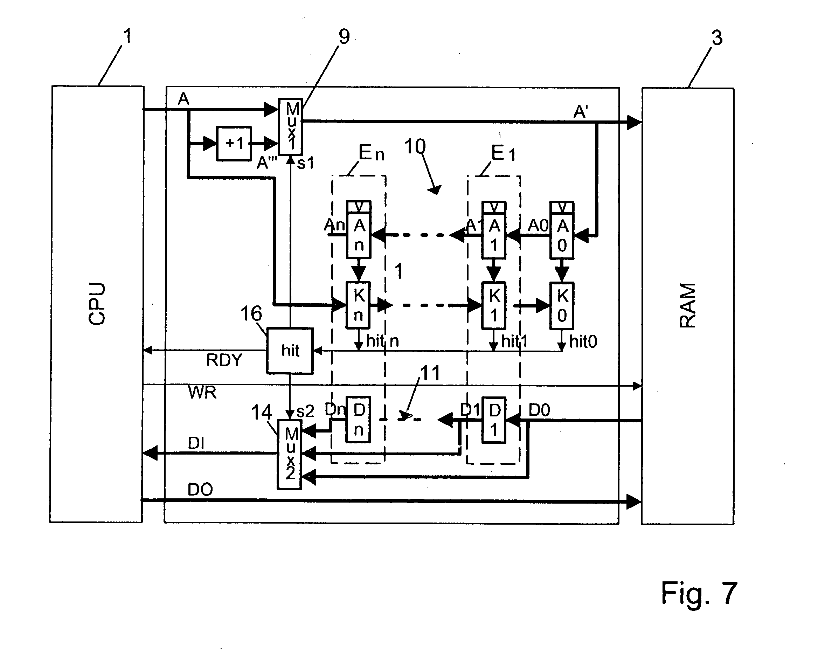

Die Figuren 7 bis 9 zeigen verschiedene Ausgestaltungen von Schaltungsanordnungen, bei denen das Adressregister als Schieberegister 10 realisiert ist. Dadurch lassen sich die vorstehend beschriebenen und in den Tabellen 3-4 dargestellten Wartezustände der CPU 1 bei einem Fetch-Befehl (sogenannte Fetch-MISS-Zustände) vermeiden.

Das dargestellte Schieberegister 10 hat wenigstens eine Tiefe von 2 bzw. allgemein eine Tiefe von (n+1) Adressregistern A0-An.

Jede der Speicherzellen A0-An ist mit einem zugehörigen Gültigkeits-Bit V0-Vn (valid) verknüpft. Diese sind vor jedem Start der CPU ungültig zu setzen. Bei der Eintragung von gültigen Read/Fetch-Adressen wird das zugehörige V-Bit gesetzt, bei einem Write-HIT ist es zu löschen, um Daten-Konsistenz-Konflikte zu verhindern.

Jede der Speicherzellen A0-An ist mit einem zugehörigen Komparator K0-Kn verknüpft. Die Komparatoren K0-Kn erhalten jeweils die von der CPU 1 ausgegebene Adresse und führen wie bisher einen Vergleich mit der in den Adressregistern A0-An gespeicherten Adresse durch.

Die vom steuerbaren Inkrementer 2 erzeugten Adressen werden bei jedem Taktzyklus um eine Position im Adress-Schieberegister 10 weitergeschoben.

Die Schaltungsanordnung hat ferner ein Daten-Schieberegister 11, in dem die zu den im Adress-Schieberegister 10 gespeicherten Adressen gehörigen Daten gespeichert sind. Diese werden ebenfalls bei jedem Taktzyklus um eine Position im Daten-Schieberegister 11 weitergeschoben.

Global betrachtet können somit Schieberegister-Zellen E0-En definiert werden, die jeweils ein Adressregister A0-An, ein Gültigkeitsbit V0-Vn, einen Komparator K0-Kn und ein Datenregister D1-Dn umfassen. Die Schieberegister-Zelle E0 benötigt kein Datenregister D0, der Speicher 2 liefert das Datum des virtuellen Datenregisters D0.

Die Funktionsweise der in den Figuren 7 bis 9 dargestellten Schaltungsanordnungen ist nochmals in den Tabellen 5 und 6 wiedergegeben, sie entspricht jetzt auch voll der Darstellung im Impulsdigramm von Figur 3.

**Tabelle 5:**

| Write-(oder NOOP-)Befehl mitten im PreFetch-Fluß (bei einer Schieberegister-Tiefe >=2, n>=1) | |
|---|---|
| CPU: | Memory: Schieberegister: |
| Read a | wait |
| wait and fetch a | Read a |
| Read a+1 | Read a+1 |
| Read a+2 | Read a+2 |
| Read a+3 | Read a+3 |
| Write b | Read a+4 |
| Read a+4 | Write b \| a+4 aus {A1,V1,D1} an CPU |
| Read a+5 | Read a+5 |
| Read a+6 | Read a+6 |
| ... | |

**Tabelle 6:**

| Daten-Read-(oder I/O-)Befehl mitten im PreFetch-Fluß (bei einer Schieberegister-Tiefe >=3, n>=2) | |
|---|---|
| CPU: | Memory: Schieberegister: |
| Read a | wait |
| wait and fetch a | Read a |
| Read a+1 | Read a+1 |
| Read a+2 | Read a+2 |
| Read a+3 | Read a+3 |
| Read b | Read a+4 |
| wait and fetch b | Read b |
| Read a+4 | Read b+1 \| a+4 aus {A2, V2,D2} an CPU |
| Read a+5 | Read a+5 |
| Read a+6 | Read a+6 |
| ... | |

Je nach Tiefe der Schieberegister 10,11 ist es bei dieser Schaltungsanordnung sozusagen möglich, einen oder mehrere Takte in die Vergangenheit zu blicken. Dies ist in den Tabellen 5 und 6 anschaulich dargestellt:

Nach dem ersten Befehls-Read-Befehl (Read a) einer Sequenz von Fetch-Befehlen (Read a, Read a+1, Read a+2, Read a+3...) geht die CPU 1 zwar nach einem Daten-Read-Befehl (Read b) immer noch in einen Wait-Zustand über, die CPU 1 kann die nachfolgende Sequenz von Befehls-Read-Befehlen (Read a+4...) jetzt jedoch ohne Unterbrechung abarbeiten. Dies ist dadurch möglich, dass im Daten-Schieberegister die Ergebnisse, d.h. die Daten mehrerer bereits vorangehend angeforderter Read-Befehle noch in den Datenregistern D1-Dn des Daten-Schieberegisters 11 gespeichert sind und bei einem erneuten Aufruf durch die CPU 1 (z.B. Read a+4) direkt aus dem entsprechenden Datenregister Di ausgelesen werden können.

Im Taktzyklus T, in dem von der CPU z.B. der Befehl Read a+3 ausgegeben wird, wird in vorstehend beschriebener Weise bereits die Adresse a+4 generiert und am Adress-Schieberegister A0 und am Speicher 3 angelegt, die mit der nächsten Taktflanke im Adress-Schieberegister 10 in A0 gespeichert wird. Im nächsten Taktzyklus (vergleiche Tabelle 5 und 6) wird, parallel zum von der CPU angelegten Befehl Write b oder Read b, der zugehörige Dateninhalt aus dem Speicher 3 geholt und am Daten-Schieberegister 11 angelegt, bei der nachfolgenden Taktflanke wird das Datum in D1 und die zugehörige Adresse in A1 gespeichert. Bei der Ausgabe des Befehls Read a+4 durch die CPU 1 steht das zugehörige Ergebnis also bereits zur Verfügung und kann in diesem Fall aus dem Datenregister D1 beim "Write b"-Befehl und aus D2 beim "Read b"-Befehl ausgelesen werden.

Die Schaltungsanordnung der Figuren 7 bis 9 bekommt somit eine cache-ähnliche Funktionalität, ist jedoch wesentlich einfacher aufgebaut.

Die Datenausgänge jedes Datenregisters D1-Dn und der Speicherausgang als D0 sind mit einem Multiplexer 14 verbunden. Der Multiplexer 14 selektiert in Abhängigkeit von einem ihm zugeführten Steuersignal den entsprechenden Eingang und leitet das anliegende Datum an die CPU 1 weiter. Am Beispiel von Tabelle 6: Hat z.B. der Komparator K2 beim Befehl Read a+4 als Ergebnis einen HIT, so wählt der Multiplexer 14 das Datenregister D2 aus und leitet das darin gespeicherte Datum an die CPU 1 weiter.

Das HIT-Signal der Komparatoren K0-Kn wird zunächst an eine HIT-Signal-Verarbeitungseinheit 16 geleitet, die daraus ein Steuersignal für den Multiplexer 9, ein Steuersignal für den Multiplexer 14 sowie ein entsprechendes Ready-Signal RDY für die CPU 1 erzeugt.

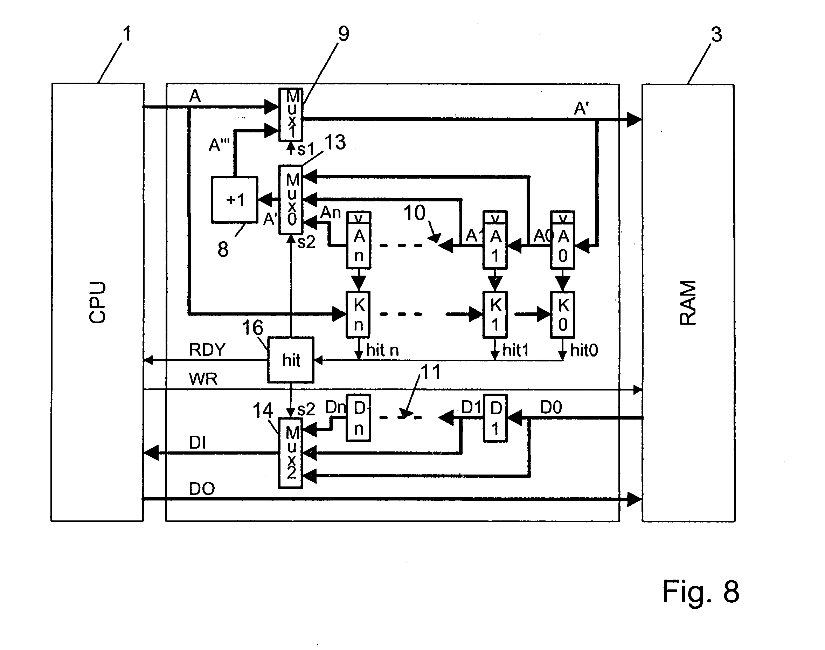

Figur 8 unterscheidet sich von Figur 7 durch die Art der Erzeugung einer inkrementierten Adresse. Im Gegensatz zur Ausführungsform von Figur 7, bei der dem steuerbaren Inkrementer 2 die von der CPU 1 ausgegebene Adresse zugeführt wurde, wird die Adresse nun aus den Adressregistern A0-An ausgelesen. Die Adressregister A0-An sind hierzu jeweils mit einem Multiplexer 13 verbunden, der wahlweise einen seiner Eingänge selektieren und die anliegende Adresse an den Inkrementer 8 weiterleiten kann. Der Multiplexer 13 wird ebenso wie die anderen Multiplexer 9,14 von einem von der HIT-Signal-Verarbeitungseinheit 16 erzeugten Steuersignal gesteuert.

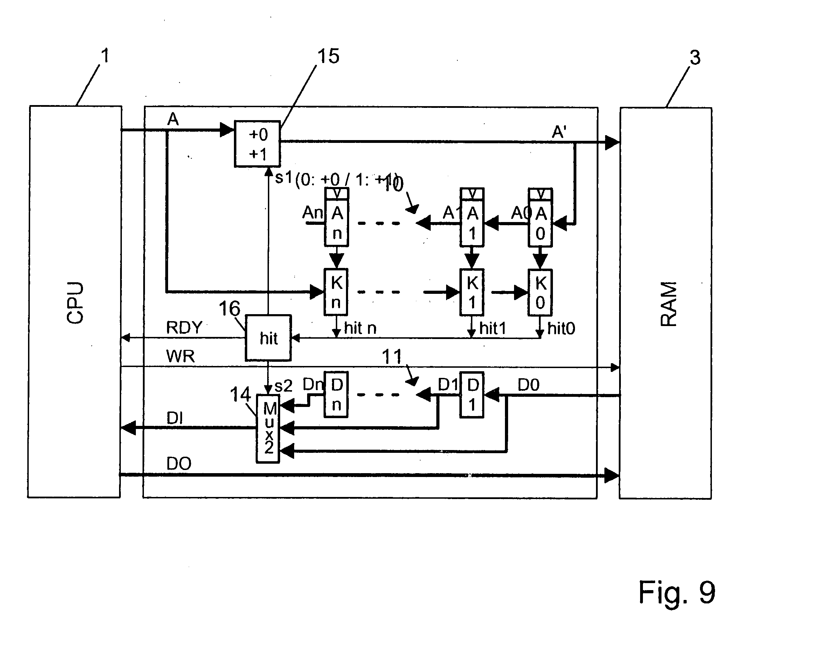

Figur 9 zeigt eine Ausgestaltung einer Schaltungsanordnung mit Adress- und Daten-Schieberegistern 10,11, bei der der steuerbare Inkrementer als Carry-Inkrementer 16 ausgeführt ist. Dieser wird ebenfalls von der HIT-Signal-Verarbeitungseinheit 16 gesteuert.

Für alle Ausführungsformen der Erfindung ist es möglich, die Adress-, Gültigkeits- und Datenwerte entweder bei jedem Taktzyklus oder nur bei bestimmten, vorgegebenen Speicherzugriffs-Operationen in den betreffenden Schieberegistern 10,11 weiter zu schieben. Eine Möglichkeit besteht darin, die Informationen nur bei Read- oder Fetch-Befehlen durch das Register 10,11 hindurch zu schieben, da insbesondere die Archivierung von Write-Befehlen, NOOP und I/O-Zugriffen den Leistungsgewinn verringern.

Das Weiterschieben der Schieberegister 10 und 11 bei jedem Takt, also bei allen CPU-Operationen (auch bei den Write-, NOOP- und den I/O-Befehlen) ist also ineffizient, da ein großer Anteil (etwa 20%) aller Schieberegister-Einträge somit mit ungültig gesetzten Write-, NOOP- und I/O-Operationen gefüllt ist und somit die Read-HIT-Wahrscheinlichkeit geschmälert wird.

Ein Weiterschieben der Schieberegister 10 und 11 nur bei Read/Fetch-Befehlen) steigert die Leistung der CPU damit wesentlich (23%) oder die Länge der Schieberegister 10 und 11 kann bei gleicher Leistung etwas kürzer gewählt werden.

Darüber hinaus besteht ferner die Möglichkeit, auch bei einem Read- oder Fetch-Befehl das Schieberegister 10,11 nicht weiter zu schieben, wenn ein HIT in den Register-Zellen E1-E(n-1) aufgetreten ist, also bei einem sogenannten Read-HIT (die Register-Zelle E0 ist hier ausgenommen, da sie gerade das PreFetch-Element enthält). Wird bei einem Read-HIT in einer der Zellen E1-E(n-1) trotzdem die aktuelle Adresse A0 und das zugehörige Datum D0 durch die Schieberegister 10,11 hindurch geschoben, so wäre dieser Wert andernfalls mehrfach im Schieberegister 10,11 enthalten, außer bei einem HIT in der Schieberegister-Zelle En, da dieses letzte Element ja hinausgeschoben wird.

Mehrere inhaltlich identische Schieberegister-Einträge müssen keinen Fehler verursachen, da ein beliebiger hiervon ausgewählt werden kann. Da jedoch redundante Information im Schieberegister 10,11 enthalten ist, verringert sich die Treffer-Rate, da anstelle des mehrfachen Eintrages auch andere Daten gespeichert sein könnten.

Vorzugsweise wird daher nur bei einem Read-MISS das Schieberegister 10,11 um eine Position weiter geschoben.

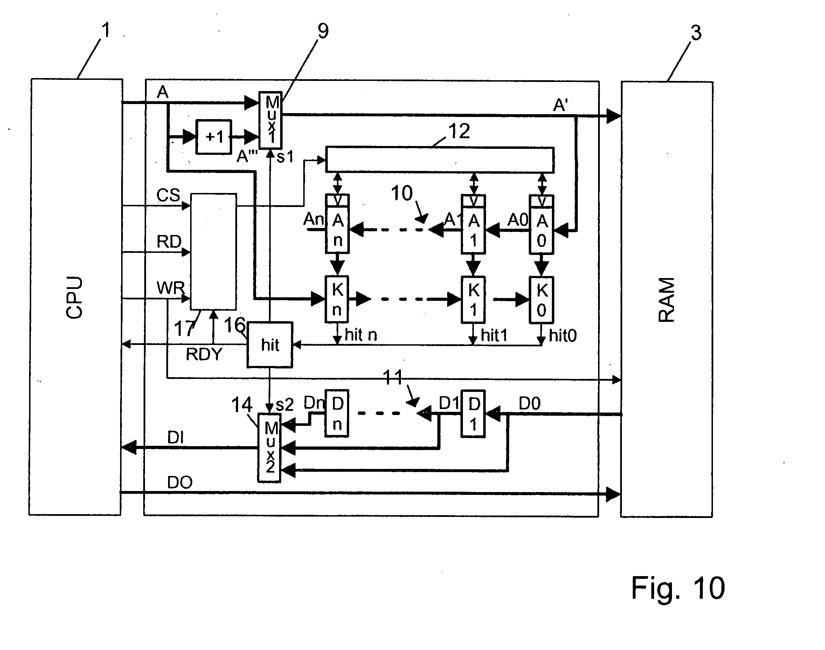

Figur 10 zeigt eine weitere Ausgestaltung der Schaltungsanordnung mit einer besonders effizienten Steuerung der Adressund Daten-Schieberegister 10 und 11.

Zur Steuerung der nachfolgend beschriebenen Funktionen ist eine Schieberegister-Steuereinheit 12 für die Schieberegister 10 und 11 vorgesehen, die auf den Schiebevorgang der Schieberegister-Zellen E0 bis En individuellen Einfluß nimmt.

Das Verfahren des Hindurchschiebens von Adresse und Datum durch die Schieberegister 10,11 nur bei jedem Read-MISS hat aber auch einen Nachteil: Wird beispielsweise eine kleine Programmschleife oft durchlaufen, dann werden für den weiteren Programmablauf die notwendigen Befehls-Codes in kurzer Zeit durch die Schieberegister 10,11 hindurch- und hinausgeschoben und müssen durch erneute Befehls-Read-MISS-Operationen neu geholt werden. Dies führt so zu zyklisch wiederkehrenden Befehls-Read-MISS-Operationen, die eigentlich nicht sein müßten.

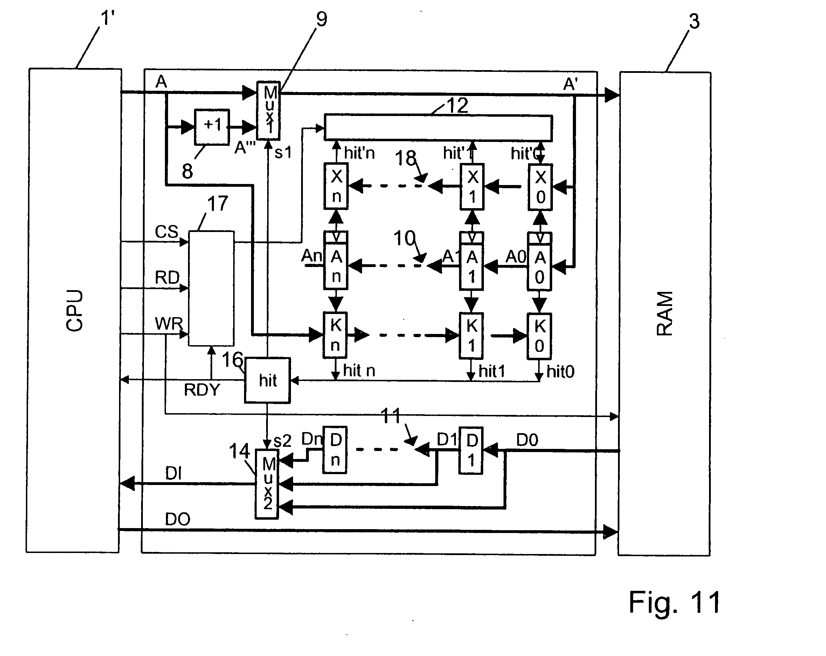

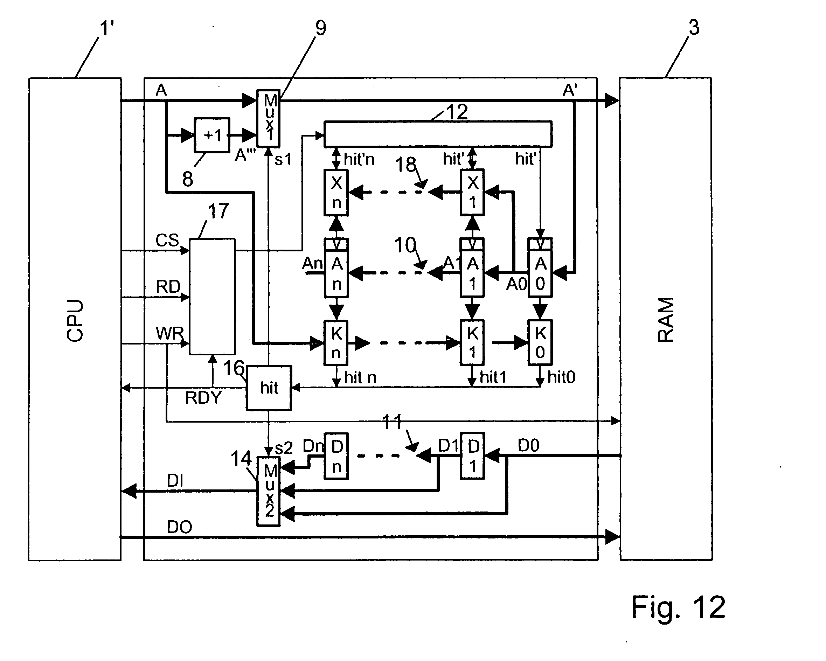

Zur Behebung dieses Problems werden die Schieberegister 10 und 11 derart gesteuert, dass der Inhalt der Schieberegister-Zelle Ei gelöscht wird, deren Adresse Ai der Adresse A' (in Figur 10 und 11) oder der im Adressregister A0 (in Figur 12) gespeicherten Adresse entspricht. Die Schieberegister-Inhalte der Register-Zellen E0...E(i-1) rücken dabei nach E1...Ei auf und der ehemalige Inhalt der Zelle Ei wird in E0 oder in E1 neu eingetragen (hierbei wird in Figur 10 und 11 der Inhalt von Di der CPU als HITi-Access sofort übergeben und bei der nächsten Taktflanke die Adresse von Ai in A0 eingetragen und zugleich dem Speicher übergeben, so dass dieser am Ausgang D0 den Wert von Di anlegt). Dies ist logisch betrachtet gleichbedeutend mit der Entnahme eines Eintrags Ei aus dem Schieberegister 10,11 und dem Einsortieren wieder am Schieberegister-Anfang in der Schieberegister-Zelle E0 oder E1. Der Inhalt der Register-Zelle Ei kann somit erneut n-Takte lang im Schieberegister 10,11 verbleiben und zu Treffern führen.

Durch diese Maßnahme kann die HIT-Rate und damit die Leistung der CPU nochmals wesentlich erhöht werden.

Zur Durchführung dieser Funktionen ist ferner eine Steuereinheit 17 vorgesehen, die mit der Schieberegister-Steuereinheit 12 zusammen wirkt und von der CPU 1 insbesondere den Befehls-Zustand (Read/Fetch, Write, NOOP und I/O-Access) erhält.

Die Figuren 11 und 12 zeigen eine weitere Ausführungsform der Erfindung, bei der parallel zum Adress-Schieberegister 10 und den Komparatoren 5 (K0-Kn) ein zweiter Satz Komparatoren 18 (X0-Xn) vorgesehen ist. Die Komparatoren K0-Kn werden für die HIT-Erkennung bei den CPU-Zugriffen benötigt, die Komparatoren X0-Xn arbeiten hierzu zeitlich parallel für die erfindungs-interne PreFetch-Hit-Erkennung. Die einzelnen Komparatoren X0-Xn erhalten in Figur 11 jeweils die vom steuerbaren Inkrementer 2 ausgegebene Adresse A' und vergleichen diese mit den im Adress-Schieberegister 10 gespeicherten Adressen. Dadurch ist es möglich, auch beim PreFetch-Zyklus mit der inkrementierten Adresse A+1 mehrfache identische Einträge in die Schieberegister 10 und 11 zu vermeiden.

Figur 12 unterscheidet sich schaltungsmäßig von Figur 11 darin, dass die zweiten Adress-Komparatoren 18 keinen Komparator X0 für die Adresse A0 aufweisen und dass die Komparatoren X1-Xn jeweils an das Adressregister A0 angeschlossen sind und diesen Wert vergleichen mit den im Adress-Schieberegister 10 gespeicherten Adressen. Nach der Schaltungsanordnung gemäß Figur 11 wird ein unerwünschter Multi-PreFetch-Hit schon vor dem ersten Eintrag in die Speicherzelle A0 verhindert, von Nachteil ist hierbei jedoch, dass die Adresse A' zeitlich recht spät eintrifft und so die Taktperiode der CPU-Taktversorgung ungünstig, d.h. leistungsmindernd verlängern kann. Bei einer Schaltungsanordnung gemäß der Figur 12 besteht dieser Nachteil nicht, die Adresse von A0 steht die ganze Taktperiode lang an, der Unterschied hier ist, dass nun zur Vermeidung eines unerwünschten Multi-PreFetch-Hit einfach der Inhalt der Zelle E0 nicht in die Schieberegister 10 und 11 zu übernehmen ist, dass der Inhalt von E0 bei einem PreFetch-HIT verworfen wird.

Ferner ist folgende Situation möglich: Bei einem Schreib-Zugriff wird der Speicherinhalt der adressierten Speicherzelle im Speicher 3 geändert. Bei einem kurz darauf folgenden Read/Fetch-Zugriff auf diese Zelle, bei dem im Adress-Schieberegister 10 ein "HIT" auftritt, kann ein Fehler auftreten, da im zugehörigen Datenregister Di noch der alte Wert gespeichert ist.

Um derartige Fehler zu vermeiden, könnte entweder der Inhalt der entsprechenden Register-Zelle Ei bei einem Write-HIT entweder gelöscht oder der Schieberegister-Inhalt durch ein sogenanntes Gültigkeits-Bit Vi (valid) ungültig gesetzt werden.

Bei einem Write-HIT könnte der zugehörige Datenregister-Eintrag Di auch aktualisiert werden. Dazu müßte aber vor jedem Datenregister ein zusätzlicher Multiplexer eingefügt werden, die das von der CPU 1 ausgegebene Schreibdatum DO an das richtige Datenregister Di anlegt.

Die durch Schreib-Operationen ungültig gewordenen, bzw. die zur Vermeidung von Multi-Hit gelöschten Schieberegister-Zellen Ei können im einfachsten Fall durch die Schieberegister 10 und 11 hindurchgeschoben werden. Diese ungültigen Zellen reduzieren die Leistung der Schaltungsanordnung aber in nicht notwendiger Weise. Die Schieberegister-Steuereinheit 12 kann bei Neueinträgen diese ungültig gewordenen Zellen Ei wieder füllen, indem nicht alle Zellen geschoben werden, sondern nur die Zellen E0-E(i-1) nach E1-Ei, die Zellen E(i+1)-En können belassen werden, der neue Eintrag wird in E0 (bei einer Schaltungsanordnung nach Figur 12 in E1) eingetragen.

## Patentansprüche

1. Schaltungsanordnung für ein CPU-Speicher-System mit Ready-Signal-Steuerung zur Verbesserung der Leistungsfähigkeit der CPU (1) beim Auslesen und Schreiben von Daten aus bzw. in einen Speicher (3)
**gekennzeichnet durch**,
- einen steuerbaren Inkrementer (2), der entweder die von der CPU (1) ausgegebene Adresse (a) oder eine inkrementierte Adresse (a+1) ausgibt,
- einen Adressspeicher (4,10) zum Speichern der vom steuerbaren Inkrementer (2) ausgegebenen Adresse (a,a+1) und
- einen Komparator (5,K0-Kn) zum Vergleich der im Adressspeicher (4,10) gespeicherten Adresse mit einer von der CPU (1) in einem nachfolgenden Taktzyklus (Tn) ausgegebenen Adresse (a), wobei der Komparator (5,K0-Kn) den steuerbaren Inkrementer (2) derart steuert, dass dieser bei Übereinstimmung der verglichenen Adressen (HIT) eine inkrementierte Adresse (a+1), und bei Nichtübereinstimmung der verglichenen Adressen (MISS) die von der CPU (1) gelieferte Adresse (a) ausgibt.

2. Schaltungsanordnung nach Anspruch 1,
**dadurch gekennzeichnet,**
**dass** der Adressspeicher (4,10) ein Schieberegister (10) mit mehreren Adress-Speicherzellen (A0-An) ist, in dem die dem Speicher (3) zugeführten Adressen (a) gespeichert werden.

3. Schaltungsanordnung nach Anspruch 2,
**dadurch gekennzeichnet,**
**dass** das Adress-Schieberegister (10) zwei oder drei Adress-Speicherzellen (Ai) aufweist.

4. Schaltungsanordnung nach Anspruch 2,
**dadurch gekennzeichnet,**
**dass** das Adress-Schieberegister (10) mehr als drei Adress-Speicherzellen (Ai) aufweist.

5. Schaltungsanordnung nach einem der Ansprüche 2 bis 4,
**dadurch gekennzeichnet,**
**dass** jede Adress-Speicherzelle (Ai) des Adress-Schieberegisters (10) mit einem Komparator (Ki) verknüpft ist, der die in der zugehörigen Adress-Speicherzelle (Ai) gespeicherte Adresse mit einer von der CPU (1) ausgegebenen Adresse (a) vergleicht.

6. Schaltungsanordnung nach einem der vorhergehenden Ansprüche,
**dadurch gekennzeichnet,**
**dass** für den Adressspeicher (4), bzw. für jede Zelle (Ai) im Adress-Schieberegister (10) ein Gültigkeit-Bit (Vi) vorgesehen ist.

7. Schaltungsanordnung nach Anspruch 6,
**dadurch gekennzeichnet,**
**dass** bei jedem von den Komparatoren (5,K0-Kn) durchgeführten Vergleich zusätzlich geprüft wird, ob das zugehörige Gültigkeits-Bit (Vi) gesetzt ist.

8. Schaltungsanordnung nach einem der vorhergehenden Ansprüche,
**dadurch gekennzeichnet,**
**dass** ein Daten-Schieberegister (11) mit mehreren Daten-Speicherzellen (Di) vorgesehen ist, in denen jeweils das zu den in den Adress-Speicherzellen (Ai) gespeicherten Adressen gehörige, aus dem Speicher (3) ausgelesene Datum gespeichert ist.

9. Schaltungsanordnung nach einem der vorhergehenden Ansprüche,
**dadurch gekennzeichnet,**
**dass** bei einem Write-HIT im Adressspeicher (4), bzw. in der Zelle Ai im Adress-Schieberegister (10) das zugehörige Gültigkeits-Bit (Vi) gelöscht wird.

10. Schaltungsanordnung nach einem der vorhergehenden Ansprüche 1 bis 8,
**dadurch gekennzeichnet,**
**dass** bei einem Write-HIT in der Zelle (Di) im Daten-Schieberegister (11) das Datum aktualisiert wird.

11. Schaltungsanordnung nach einem der vorhergehenden Ansprüche,
**dadurch gekennzeichnet,**
**dass** eine Schieberegister-Steuereinheit (12) für das Adress-Schieberegister (10) und für das Daten-Schieberegister (11) vorgesehen ist, mit der das Hindurchschieben der gespeicherten Adressen und Daten durch das Adress-Schieberegister (10) und das Daten-Schieberegister (11) nach vorgebbaren Regeln gesteuert werden kann.

12. Schaltungsanordnung nach einem der vorhergehenden Ansprüche,
**dadurch gekennzeichnet,**
**dass** bei einem Eintrag in das Adress-Schieberegister (10) und das Daten-Schieberegister (11) alle Zellen (Ai, Vi, Di) verschoben werden, auch wenn Gültigkeits-Bits ungültig gesetzt sind.

13. Schaltungsanordnung nach einem der vorhergehenden Ansprüche 1 bis 11,
**dadurch gekennzeichnet,**
**dass** bei einem Eintrag in das Adress-Schieberegister (10) und das Daten-Schieberegister (11) Zellen (Ai, Vi, Di) gelöscht werden, wenn ihr Gültigkeits-Bit ungültig gesetzt ist.

14. Schaltungsanordnung nach Anspruch 11,
**dadurch gekennzeichnet,**
**dass** die Schieberegister-Steuereinheit (12) das Adress-Schieberegister (10) und das Daten-Schieberegister (11) derart steuert, dass nur bei einer Read-Operation die im Schieberegister (10) gespeicherten Adressen und die im Schieberegister (11) gespeicherten Daten verschoben werden.

15. Schaltungsanordnung nach Anspruch 11,
**dadurch gekennzeichnet,**
**dass** die Schieberegister-Steuereinheit (12) das Adress-Schieberegister (10) und das Daten-Schieberegister (11) derart steuert, dass nur bei einem Read-MISS die im Adress-Schieberegister (10) gespeicherten Adressen und die im Schieberegister (11) gespeicherten Daten weiter geschoben werden.

16. Schaltungsanordnung nach Anspruch 11,
**dadurch gekennzeichnet,**
**dass** die Schieberegister-Steuereinheit (12) das Adress-Schieberegister (10) und das Daten-Schieberegister (11) derart steuert, dass bei einem Read-HIT der Inhalt der zugehörigen Adress-Speicherzelle (Ai) und der Daten-Speicherzelle (Di) gelöscht wird, der Inhalt der unteren Adress-Speicherzellen (A0-A(i-1)) und Daten-Speicherzellen (D0-D(i-1)) aufrückt und der Inhalt der Adress-Speicherzelle (Ai) und der Daten-Speicherzelle (Di) in der Adress-Speicherzelle (A1) oder (A0) und der Daten-Speicherzelle (D1) eingetragen wird oder mit der Adresse (Ai) der Speicher (3) adressiert wird, so dass an seinem Daten-Ausgang (D0) der Wert von (Di) erscheint.

17. Schaltungsanordnung nach einem der vorhergehenden Ansprüche,
**dadurch gekennzeichnet,**
**dass** ein Komparator (X0-Xn) die im Adressspeicher (10) gespeicherten Adressen mit einer an den Speicher (3) angelegten Adresse vergleicht und bei einem PreFetch-HIT den Neueintrag dieser PreFetch-Operation in der Adress-Schieberegister-Zelle (A0) durch Löschen des zugehörigen Gültigkeits-Bits V0 ungültig setzt.

18. Schaltungsanordnung nach einem der vorhergehenden Ansprüche 1 bis 16,
**dadurch gekennzeichnet,**
**dass** ein Komparator (X1-Xn) die im Adressspeicher (10) gespeicherten Adressen mit der in der Adress-Schieberegister-Zelle (A0) gespeicherten Adresse vergleicht und bei einem PreFetch-HIT diesen Neueintrag einer PreFetch-Operation in der Adress-Schieberegister-Zelle A0 durch Löschen des zugehörigen Gültigkeits-Bits V0 ungültig setzt.

19. Schaltungsanordnung nach einem der Ansprüche 1 bis 16,
**dadurch gekennzeichnet,**
**dass** ein Adress-Multiplexer (13) vorgesehen ist, der bei einem Hit die in der zugehörigen Adress-Speicherzelle (Ai) gespeicherte Adresse selektieren und an den steuerbaren Inkrementer (2) weiterleiten kann.

20. Schaltungsanordnung nach einem der vorhergehenden Ansprüche,
**dadurch gekennzeichnet,**
**dass** ein Daten-Multiplexer (14) vorgesehen ist, der bei einem Hit das in der zugehörigen Daten-Speicherzelle (Di) gespeicherte Datum selektieren und an die CPU (1) weiterleiten kann.

21. Schaltungsanordnung nach einem der vorhergehenden Ansprüche,
**dadurch gekennzeichnet,**
**dass** der steuerbare Inkrementer (2) einen Inkrementer (8) sowie einen Multiplexer (9) umfaßt, dem die von der CPU (1) ausgegebene Adresse (a) sowie die vom Inkrementer (8) ausgegebene inkrementierte Adresse (a+1) zugeführt werden.

22. Schaltungsanordnung nach einem der vorhergehenden Ansprüche 1 bis 20,
**dadurch gekennzeichnet,**
**dass** der steuerbare Inkrementer (2) als Carry-Inkrementer (15) realisiert ist.

23. Schaltungsanordnung nach einem der vorhergehenden Ansprüche,
**dadurch gekennzeichnet,**
**dass** der bzw. die Komparatoren (K0-Kn) ein Ready-Signal (RDY) für die CPU (1) erzeugen.

24. Schaltungsanordnung nach Anspruch 8,
**dadurch gekennzeichnet,**
**dass** die Daten-Speicherzellen (D1-Dn) mehrere Byte breit sind.

25. Schaltungsanordnung nach einem der vorhergehenden Ansprüche,
**dadurch gekennzeichnet,**
**dass** dem Inkrementer (8) die von der CPU (1) ausgegebene Adresse (a) zugeführt wird.

26. Schaltungsanordnung nach einem der vorhergehenden Ansprüche 1 bis 24,
**dadurch gekennzeichnet,**
**dass** dem Inkrementer (8) eine in einer der Adress-Speicherzellen (Ai) enthaltene Adresse (a) zugeführt wird.

27. Schaltungsanordnung nach einem der vorhergehenden Ansprüche,
**dadurch gekennzeichnet,**
**dass** die Schaltungsanordnung als separate Baueinheit zwischen der CPU (1) und dem Speicher (3) angeordnet ist.

28. Schaltungsanordnung nach einem der vorhergehenden Ansprüche,
**dadurch gekennzeichnet,**
**dass** eine Hit-Signal-Verarbeitungseinheit (16) zur Steuerung der Multiplexer (9,13,14) sowie zur Erzeugung des Ready-Signals vorgesehen ist.

29. Schaltungsanordnung nach einem der vorhergehenden Ansprüche,
**dadurch gekennzeichnet,**
**dass** der Speicher (3) ein synchroner RAM- oder SRAM-Speicher ist.

30. Datenverarbeitungseinrichtung mit einer Schaltungsanordnung nach einem der vorhergehenden Ansprüche.
